# EUROPEAN PATENT SPECIFICATION

(11) **EP 0 606 752 B1**
(45) Date of publication and mention of the grant of the patent: **04.06.1997**
(21) Application number: 93310370.7
(22) Date of filing: 21.12.1993
(51) Int. Cl.: H05K 5/06, B60R 16/02

(54) **Waterproof casing**
Wasserdichtes Gehäuse
Boîtier étanche

(30) Priority: 12.01.1993 JP 20533/93
(43) Date of publication of application: 20.07.1994
(73) Proprietor: Sumitomo Wiring Systems, Ltd., Yokkaichi-shi Mie-ken (JP)
(72) Inventor: Sumida, Tatsuya, c/o Sumitomo Wiring Systems, Ltd., Yokkaichi-shi, Mie-ken (JP); Matsushita, Yasuo, c/o Sumitomo Wiring Syst., Ltd., Yokkaichi-shi, Mie-ken (JP); Akiyama, Yuichi, Kure-shi, Hiroshima-ken (JP)
(74) Representative: Spall, Christopher John

(56) References cited:
- DE-A- 3 514 440
- FR-A- 2 329 136
- FR-A- 2 496 016
- US-A- 4 959 018

## Description

This invention relates to a waterproof casing and more particularly to a waterproof casing suitable for accommodating an electronic unit in an engine compartment in a vehicle.

In the case of accommodating in a casing a device which must be proofed, a casing having a simple box like construction is unable to effect waterproofing of the device under an environment where the ambient temperature is subject to rapid changes. Since a pressure within the casing is changed in response to a temperature change, the casing is deformed and water enters into the interior of the casing through clearances opening between a body and a cover for sealing the interior of the casing.

Heretofore, some waterproof casings which are used under such circumstances are known by Japanese Utility Model Public Disclosure Nos. 56-112978 (1981) and 57-186094 (1982). These casings are not formed into a sealed construction but they are provided with a vent hole in order to equalize the pressure in the interior and exterior of the casing. One casing disclosed in the former reference is provided with a labyrinth vent hole which retains water entering thereinto, while another casing disclosed in the latter reference is provided with a zigzag vent hole in which baffle boards are arranged in a zigzag manner in order to prevent water from entering into the interior of the casing.

One example of such a waterproof casing is that which may be used to protect an electronic control device for an engine from contamination with water when the device is disposed in an engine compartment. In such an engine compartment, the waterproof casing is subject to high temperatures generated by the engine and low temperatures from water which enters into the compartment during driving. In this case, the conventional waterproof casings have the following problems.

In the former casings the labyrinth vent hole cannot hold a large amount of water while the zigzag vent hole in the latter casing cannot baffle a high pressure of water.

An object of the present invention is to provide a waterproof casing which can maintain an effective waterproofing function under a circumstance in which an ambient temperature is rapidly changed.

In order to achieve the above object, we provide a waterproof casing which accommodates in a box like body a device to be waterproofed, characterised in that said box-like body is provided with a communication pipe, one end of which is air-tightly connected to said box like body and the other end of which is opened at a dry area to communicate with the area.

In the above waterproof casing, since the interior of the waterproof casing communicates with the non-watered area through the communication pipe, a suction and exhaust action is effected from the interior of the casing through the pipe to the dry area when an increase on decrease in internal pressure results from a change in temperature. Accordingly, the waterproof casing does not suck in water, even if it is watered.

The present invention can provide a waterproof casing which sucks and exhausts air through the communication pipe so as to prevent water from entering into the interior of the casing even if the internal pressure is changed, since the casing communicates with the dry area.

An embodiment of our invention will now be described with reference to the accompanying figures in which:
Figure 1 is a perspective view of an embodiment of a waterproof casing of the present invention;
Figure 2 is an exploded perspective view of the waterproof casing of Figure 1;
Figure 3 is a cross sectional view taken along lines III-III in Figure 2; and
Figure 4 is an explanatory view of the casing when it is disposed in an automobile.

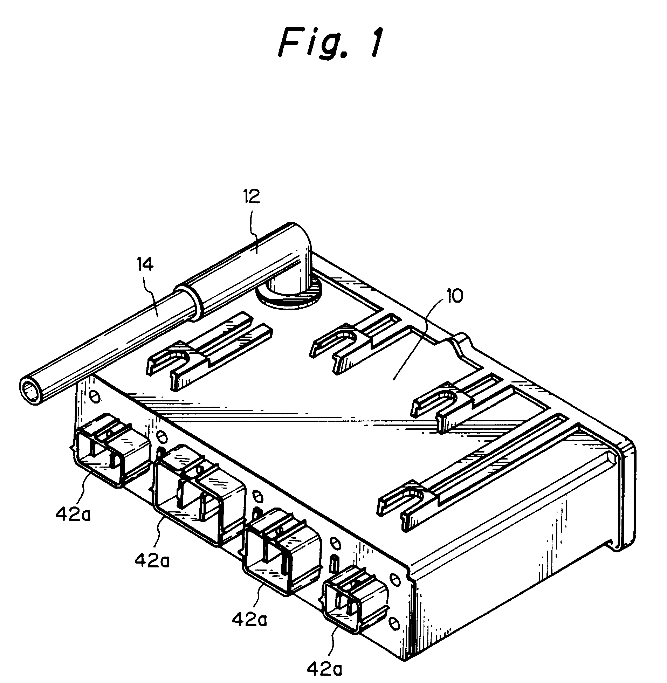

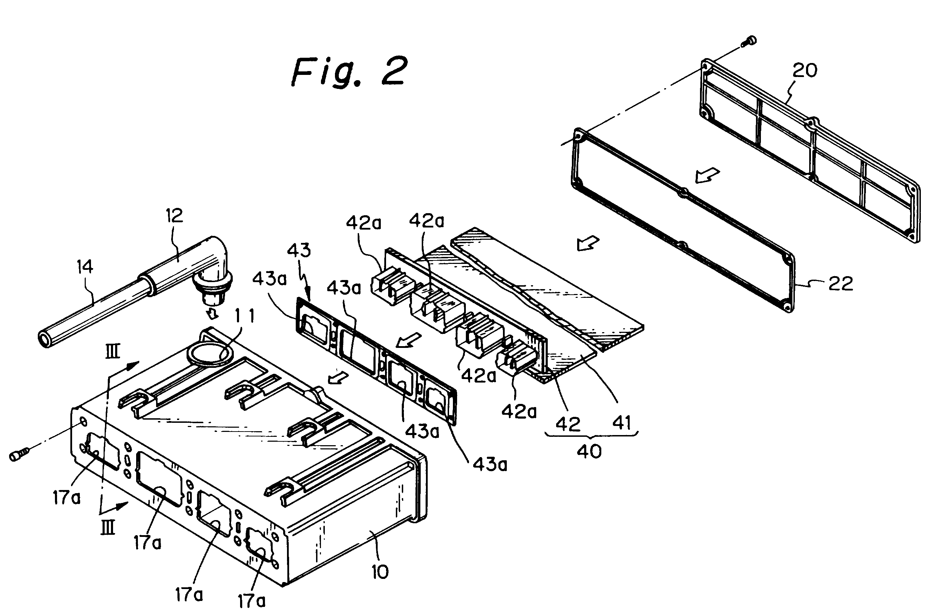

Referring now to FIGS. 1 to 4, an embodiment of a waterproof casing of the present invention is described below.

As shown in FIGS. 1 to 3, the waterproof casing comprises a box like body 1 and a cover 20 which covers an opening at the rear side of the body 10. A rubber packing 22 for sealing is disposed between peripheral edges of the opening in the body 10 and the cover 20.

The body 10 is provided with a round bore 11 at an upper and rear side. An L-shaped coupling pipe 12 made of an elastic material is connected to the round bore 11. The coupling pipe 12 is provided at an end to be connected to the round bore 11 in the body 10 with a pair of flanges 12a and 12b which are spaced away from each other by a thickness of the body 10. The front flange 12a is formed into a taper face toward the distal end of the pipe 12. A cylindrical edge wall 13 is formed around the round bore 11 so that the end of the coupling pipe 12 having flanges 12a and 12b can be inserted through the bore 11.

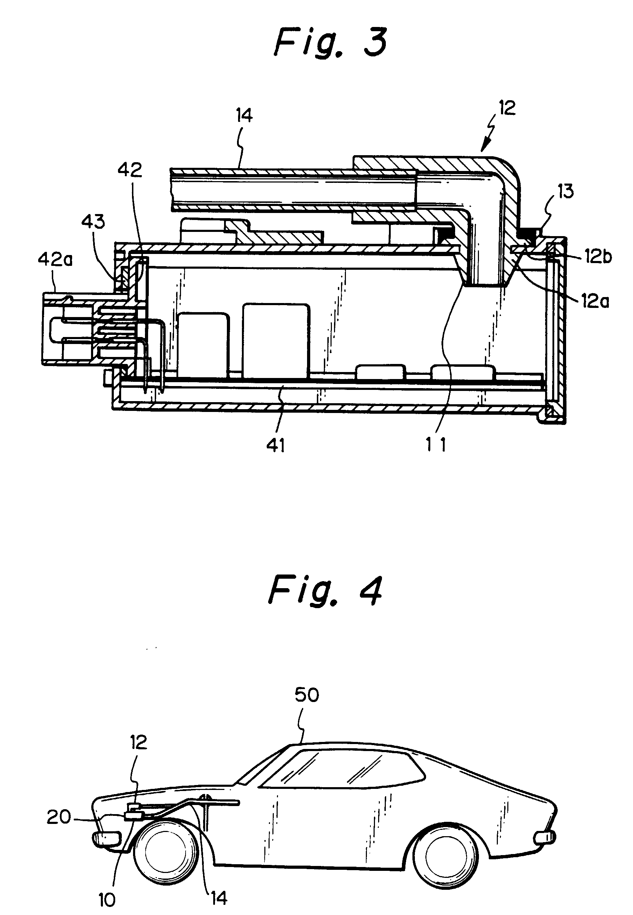

A hose 14 is inserted into the other end of the coupling pipe 12 and fastened by an elastic force of the pipe 12 so that it supports the hose 14 in an air-tight manner. The hose extends to a non-watered area 50 such as an interior of an automobile as shown in FIG. 4. In this embodiment, the coupling pipe 12 and hose 14 constitute a communication pipe.

An electronic base plate 40 on which electronic elements are arranged is accommodated in the body 10. The electronic base plate 40 comprises a print substrate 41 on which electric elements are arranged and a connector member 42 having four connectors 42a which are connected vertically on a front end edge of the print substrate 41.

The body 10 is provided at a front side end with apertures 17a through which the connectors 42a pass and extend outwardly. The rubber packing 43 having apertures 43a which accord with the apertures 17a is disposed between the connector member 42 and the body 10.

An example of use of the above embodiment of the waterproof casing in accordance with the present invention will be described below.

Upon assembling, the connector member 42 is connected to the print substrate 41 to complete the electronic base plate 40, the rubber packing 43 is inserted into the interior of the body 10 from its rear side, and the packing 43 is fixed to the body 10 by screws from its front side. Further, the cover 20 is secured to the body 10 through a rubber packing 22 by screws from the rear side of the body 10.

Then, the coupling pipe 12 is connected to the body 10. The end of the coupling pipe 12 having flanges 12a and 12b is inserted into the round bore 11. The front flange 12a with a taper face inserts into the bore 11 while the flange 12a is being deformed by a pushing force. Since the rear flange 12b extends radially along the top wall of the body 10, the rear flange 12b can not pass through the bore 11 when the flange 12b abuts on the periphery of the bore 11. Consequently, the peripheral wall of the bore 11 is clamped between the flanges 12a and 12b so that the coupling pipe 12 is secured to the body 10.

After the coupling pipe 12 is secured to the body 10, the other end of the pipe 12, in which the hose 14 is to be inserted, is turned to a given direction. For example, in the case of setting the waterproof casing in the engine compartment in the automobile, the coupling pipe 12 is oriented to the direction in which the hose 14 is introduced into the interior of the automobile. Then, an adhesive is poured on the rear side of the flange 12b in the cylindrical edge wall 13.

On the other hand, after an end of the hose 14 is disposed in an interior of an automobile 50 (FIG. 4) and the waterproof casing is accommodated in an engine compartment, the other end of the hose 14 is inserted into the coupling pipe 12. Waterproofed connectors not shown are coupled to the connectors 42a of the connector member 42 to finish assembling.

Since the engine compartment is at a high temperature due to a heat from the engine and the waterproof casing is subject to a heat from electronic circuit elements, the waterproof casing is heated to a high temperature and air in the casing tends to expand due to the high temperature. As described above, since the interior of the body 10 communicates with the interior of the automobile 50 through the coupling pipe 12 and hose 14, heat-expanded air in the casing flows into the interior 50 through the passages.

At this time, when the body 10 is watered from the outside, the body 10 is abruptly cooled from its exterior, air in the casing tends to contract, and this results in suction of external air through the coupling pipe 12 and hose 14. The air to be sucked is in the interior of the automobile 50 and thus no water enters thereto. Accordingly, it is possible to keep the electronic base plate 40 in the body 10 in a waterproofed state.

Although the hose 14 is used to make a communication between the body 10 and the interior of the automobile 50 in the above embodiment, the hose 14 may be replaced by, for example, a pipe which serves to guide an electrical cable as a harness by connecting the pipe to the coupling pipe 12 and connecting the cable to the connectors 42a through connectors not shown.

## Claims

1. A waterproof casing which accommodates in a box like body (10) a device to be waterproofed, characterised in that said box-like body (10) is provided with a communication pipe (12,14), one end of which is air-tightly connected to said box like body (10) and the other end of which is opened at a dry area (50) to communicate with said area.

2. A water-proof casing according to Claim 1, characterised in that said communication pipe (12,14) has a front flange (12a) with a taper face and a rear flange (12b) on the one end thereof.

## Patentansprüche

1. Wasserdichtes Gehäuse, das in einem schachtelähnlichen Körper (10) eine wasserdicht auszubildende Vorrichtung unterbringt,
dadurch **gekennzeichnet,** daß
der schachtelähnliche Körper (10) mit einem Verbindungsrohr (12, 14) versehen ist, dessen eines Ende luftdicht mit dem schachtelähnlichen Körper (10) verbunden ist, und dessen anderes Ende in einem trockenen Bereich (50) derart geöffnet ist, daß es mit diesem Bereich in Verbindung steht.

2. Wasserdichtes Gehäuse nach Anspruch 1,
dadurch **gekennzeichnet,** daß
das Verbindungsrohr (12, 14) an dem einen Ende einen vorderen Flansch (12a) mit einer Konusfläche und einen hinteren Flansch (12b) aufweist.

## Revendications

1. Boîtier étanche à l'eau qui loge dans un corps en forme de boîte (10) un dispositif à imperméabiliser, caractérisé en ce que ledit corps en forme de boîte (10) présente un tuyau de communication (12, 14) dont une extrémité est reliée de façon étanche à l'air audit corps en forme de boîte (10) et dont l'autre extrémité est ouverte à une zone sèche (50) pour communiquer avec ladite zone.

2. Boîtier étanche à l'eau selon la revendication 1, caractérisé en ce que ledit tuyau de communication (12, 14) a un rebord avant (12a) avec une face chanfreinée et un rebord arrière (12b) à une extrémité de celui-ci.
